# EUROPEAN PATENT APPLICATION

(11) **EP 4 002 048 A1**
(43) Date of publication of application: **25.05.2022**
(21) Application number: 20207067.8
(22) Date of filing: 12.11.2020
(51) Int. Cl.: G05D 1/02, B60W 30/165, G08G 1/00

(54) **METHOD FOR REDUCING AIR RESISTANCE FOR A VEHICLE**

(71) Applicant: VOLVO TRUCK CORPORATION, 405 08 Göteborg (SE)
(72) Inventor: GERDIN, Markus, 449 30 Nödinge (SE)
(74) Representative: Zacco Sweden AB

(57) **Abstract**

The invention relates to a method for reducing air resistance for a second vehicle (2) that drives behind and at a similar speed as a first vehicle (1), wherein a longitudinal distance (D1) between the first and second vehicles (1, 2) is relatively close so that the first vehicle (1) affects the air resistance for the second vehicle (2), wherein the method comprises: S10 - determining a current lateral position (P1) of the second vehicle (2) in relation to the first vehicle (1); S20 - identifying a desired lateral position (P2) for the second vehicle (2) in relation to the first vehicle (1), in which desired lateral position (P2) the air resistance for the second vehicle (2) is lower than in the current lateral position (P1) under current conditions; and S30 - moving the first and/or the second vehicle (1, 2) sideways so as to assume or at least approach the desired lateral position (P2) for the second vehicle (2) in relation to the first vehicle (P1).

## Description

### TECHNICAL FIELD

The invention relates to a method for reducing air resistance for a second vehicle that drives behind and at a similar speed as a first vehicle, wherein a longitudinal distance between the first and second vehicles is relatively close so that the first vehicle affects the air resistance for the second vehicle.

### BACKGROUND

There is a constant demand for improving efficiency of vehicles. An example is reducing drag (air resistance) for heavy vehicles, such as trucks and buses, driving on highways and larger roads for the purpose of reducing fuel consumption and CO₂ emissions, or power consumption in the case of electric vehicles. A well-known measure to reduce drag is to give the vehicle a shape that is aerodynamically advantageous. Another well-known measure is to let a second vehicle drive at a close distance behind a first vehicle, which for safety and fuel efficiency reasons preferably is done using a system for automatic control of the vehicle speed, such as an adaptive cruise control (ACC) system.

US2019/0346861A1 proposes a further measure for reducing fuel/power consumption, namely to let a driving control system not only control the longitudinal distance between a second vehicle driving at close distance behind a first vehicle but also suggest an optimal lateral positioning of the second vehicle in relation to the first vehicle (i.e. small-scale lateral positioning without changing lane or similar). However, US2019/0346861A1 rather proposes the idea of "suggesting an optimal lateral position"; it does not disclose how to carry out the method.

There is thus a need for improvements in this field.

### SUMMARY

The invention relates to a method for reducing air resistance for a second vehicle that drives behind and at a similar speed as a first vehicle, wherein a longitudinal distance between the first and second vehicles is relatively close so that the first vehicle affects the air resistance for the second vehicle.

The method comprises the steps of:
S10 - determining a current lateral position of the second vehicle in relation to the first vehicle;
S20 - identifying a desired lateral position for the second vehicle in relation to the first vehicle, in which desired lateral position the air resistance for the second vehicle is lower than in the current lateral position under current conditions;
   and
S30 - moving the first and/or the second vehicle sideways so as to assume or at least approach the desired lateral position for the second vehicle in relation to the first vehicle.

Accordingly, if a relative lateral position is identified where the air resistance for the second vehicle is lower under current conditions (i.e. road curvature, vehicle speed, aerodynamic properties of the vehicles, etc.), one or both of the vehicle is moved sideways/laterally from the current relative lateral position towards the desired relative lateral position. This reduces power consumption for the second vehicle.

How much the vehicles should be moved in step 30 depends on the result of steps S10 and S20 but also on the accuracy of e.g. the determination of the current lateral position and on limiting conditions, such as width of road or lane. A typical sideways movement might be in the range 5-50 cm. Also small sideways movement may have a significant effect on fuel or power consumption.

Steps S10-S20 are typically carried out in a repeating manner and the desired relative lateral position may not have been assumed completely in step S30 until steps S10-S20 are carried out again (e.g. in parallel to S30). As the conditions may have changed, such as the road curvature, the desired lateral position identified in S20 may change. The optimal, or at least a better, lateral position can thus both be found and maintained.

In practice it is likely that a regulator is used for regulating steering or lateral acceleration in step S30. As an example, a PI-regulator can be used according to lat_acc = K ^{∗} (P2-P1) + K_I ^{∗} integral (P2-P1), where P1 = current lateral position and P2 = desired lateral position, and where K and K_I are constants. Then S10 will start again before reaching P2 = P1 in S30, but the new current lateral position will be closer to the previously identified desired lateral position than the former current lateral position (unless the movement in step S30 has failed in some way, such as because of a sudden wind gust from a vehicle travelling in opposite direction or because of change in road banking).

In step S30 one or both vehicles can be moved sideways. In a platooning situation where the first and second vehicles (and possibly more vehicles) are at least partly controlled by a common (platoon) control system, it can be arranged so that the common control system can control how to move the first and/or the second vehicle sideways in step S30. It can also be arranged so that the common control system receives input from e.g. sensors and control units arranged onto the individual vehicles for determining e.g. the current relative lateral position and road curvature. In an alternative arrangement, the second vehicle can carry out the method independently of the first vehicle using sensors, control units, etc. arranged on the second vehicle.

In an embodiment, the method includes the step of: comparing (S25) the current lateral position with the desired lateral position. Step S25 may be seen as forming part of step S20 and is useful when the desired lateral position is selected among calculated values of the air resistance for different lateral positions within some lateral range, such as within a highway lane in which the vehicles currently are driving. It could be that the current position is already the same as, or sufficiently close to, the desired position so that the moving-step S30 does not have to be carried out. Comparing the two positions according to S25 is also useful for providing input data for the performance of the moving step S30, as indicated above for the PI-regulator.

In an embodiment, step S30 is carried out only if the current lateral position differs from the desired lateral position by more than a threshold value

In an embodiment, the step S10 comprises: obtaining (S15) information from at least one of a camera sensor, a radar sensor and/or a lidar sensor arranged onto the second vehicle and directed towards the first vehicle. Determining the relative lateral position for the second vehicle from such sensors is known as such. As an example, for a camera sensor this can be done by relating the position in the image to a measurement of the distance to the vehicle. The distance can be measured by the size of the vehicle in the image or by a radar or lidar sensor. As a further example, for a radar or lidar sensor the relative lateral positioning can be obtained by relating the angle and the distance to the first vehicle.

In an embodiment, the step S20 comprises: providing (S22) calculated values representing the air resistance for the second vehicle in different lateral positions within a lateral range, wherein the calculated values are based on one or more of the following current or preset parameters: wind direction, vehicle speed, longitudinal distance between the first and second vehicles, aerodynamic properties of the first vehicle, aerodynamic properties of the second vehicle, and/or road curvature; and identifying (S23) the desired lateral position based on the calculated values representing the air resistance.

The desired lateral position is preferably the position where the air resistance is minimized within the lateral range. In an example, the lateral position corresponding to the lowest calculated air resistance is selected as the desired lateral position. If the lowest air resistance is indicated for two adjacent positions, i.e. if two adjacent lateral positions indicate about the same lowest calculated air resistance, the desired lateral position may be set to be in-between these two positions. Exactly how to identify and select the desired lateral position may depend e.g. on for how many lateral positions calculated values are provided and on the distance between these lateral positions. An advantageous effect in the form of reduced power consumption can be achieved as long as the air resistance in the desired lateral position is reduced compared to the current lateral position. An advantageous effect is also achieved if it can be confirmed that the current lateral position corresponds to the desired lateral position.

Identifying the desired lateral position based on the calculated values representing the air resistance may be made by setting up a table comprising wind direction, vehicle speed, distance between the vehicles, aerodynamics of the vehicles and curvature of the road and looking up the lateral position which gives the lowest drag/air resistance. To avoid having a too large table, simplifications may be made including assuming a fixed aerodynamics of the involved vehicles, a fixed speed (such as a typical cruising speed for trucks of 80 km/h), and a fixed longitudinal distance between the vehicles (typically the distance corresponding to the smallest allowed time gap for an ACC function used). The table would then have two input dimensions: wind direction and road curvature. The table can for example be set up by simulation of the different data points in the table in a simulator for truck aerodynamics (i.e. for each point in the table, a range of relative lateral positions are simulated to find the one with the lowest drag). The table may be limited to some maximum lateral displacement/range, for example 5 meters since it is normally not desired anyway to move out of the present lane. A typical property of the table may be that if the wind comes from the right, then the optimal lateral position for the second vehicle would be to the left of the first vehicle. Similarly, if the road curvature is such that the vehicles turn somewhat to the left, the optimal lateral position for the second vehicle would be to the right of the first vehicle (if there is no significant wind from the right). The table can either be computed off-line (during development) and stored in the software, or be computed on-line on-board one of the involved vehicles to take into consideration for example the current vehicle speed, current longitudinal distance between the first and second vehicles and/or current aerodynamics properties (if these properties are assumed constant when generating the table).

Given data about the current situation, an optimal lateral position with minimized air resistance can be obtained from the table. Interpolation between neighbouring points may be used if the current data point is not exactly available in the table. The optimal lateral position may then be compared to limiting factors such as lane markers, road barriers, and road edges that set the lateral range. If the optimal lateral position is inside the lateral range, then it can be selected as the desired lateral position. If it is outside, then another position within the lateral range set by said lane markers, road barriers, and/or road edges is selected..

In an embodiment, the parameters, on which the calculated values representing the air resistance for the second vehicle are based, comprise both current and preset values, wherein the current values comprises at least one of the wind direction and/or the road curvature.

In an embodiment, the method comprises the step of: obtaining (S24) a current road curvature from one or more of the following: a current yaw rate of the first or second vehicle; lane markers, road barriers, and/or road edges identified by one or more sensors arranged onto the first or second vehicle; and/or map data.

In an embodiment, the lateral range is set by a fixed value; by map data; and/or by current lane markers, road barriers, and/or road edges identified by a sensor arranged onto the first or second vehicle. It could, for instance, be that lane markers are used for one side of the lateral range and road barriers (for identifying a road edge) are used on the other side of the lateral range.

In an embodiment, the step S30 comprises the step of: applying (S32) a lateral acceleration to the first and/or second vehicle so as to reduce the difference between the current lateral position and the desired lateral position.

In an embodiment, the step S30 comprises one or more of the following steps:
- steering (S321) the first and/or second vehicle sideways using a steering control system;
- applying (S322) individual wheel brakes of the first and/or second vehicle so as to induce a lateral movement; and/or
- applying (S323) increased drive torque to individual wheels of the first and/or second vehicle so as to induce a lateral movement.

In an embodiment, only the second vehicle is moved sideways in step S30.

In an embodiment, the method comprises the step of: measuring (S40) a current air resistance of the second vehicle. This may be done by measuring the torque applied to driveline taking into consideration current vehicle acceleration, current vehicle load, current road inclination, losses in the transmission, and the rolling resistance. When free-rolling downwards a slope one may instead measure the acceleration while considering e.g. load, road inclination and rolling resistance. The measured air resistance is useful e.g. for verifying whether a movement to the desired lateral position actually reduces the air resistance.

In an embodiment, the method comprises the step of: adapting (S50) the longitudinal distance between the first and second vehicles. Although not necessary for the present invention, adapting the longitudinal distance is normally carried out as the main measure for reducing air resistance for the second vehicle. A known adaptive cruise control (ACC) system may be used for this purpose. Typically, the method of this disclosure is suitable for use as a complement to such an ACC system for further reducing air resistance for the second vehicle. Adaptation of the longitudinal distance may alternatively be made manually by a driver in the second vehicle. Adapting the longitudinal distance normally includes measuring the longitudinal distance.

The invention also concerns a vehicle comprising a control system, wherein the control system is configured to perform the steps of the method according to above.

The invention also concerns a control system for controlling one or more vehicles, wherein the control system comprises one or more control units configured to perform the steps of the method according to above.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
Fig. 1 shows, in a schematic view, a first example where a second vehicle drives behind and at a similar speed as a first vehicle, wherein a longitudinal distance between the first and second vehicles is relatively close so that the first vehicle affects the air resistance for the second vehicle, and wherein the method of this disclosure is applicable.
Fig. 2 shows, in a schematic view, a second example where a second vehicle drives behind and at a similar speed as a first vehicle, wherein a longitudinal distance between the first and second vehicles is relatively close so that the first vehicle affects the air resistance for the second vehicle, and wherein the method of this disclosure is applicable.
Fig. 3 shows a flow chart for a first example embodiment of the method of this disclosure.
Fig. 4 shows a flow chart for a second example embodiment of the method of this disclosure.

### DETAILED DESCRIPTION OF EXAMPLE EMBODIMENTS OF THE INVENTION

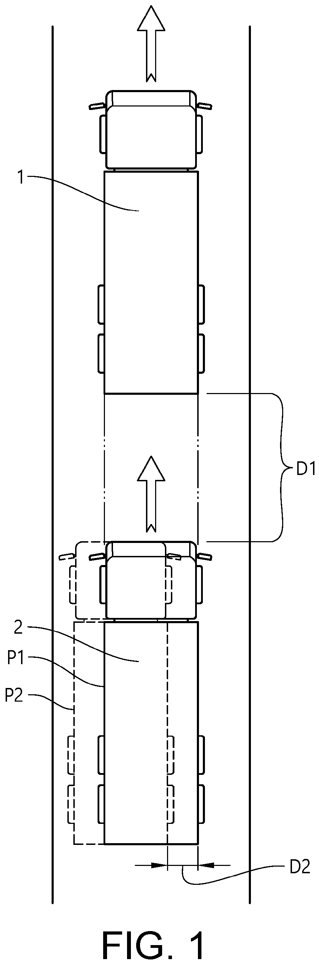

Figure 1 shows a first schematic example where a second vehicle 2 drives behind and at a similar speed as a first vehicle 1, i.e. the vehicles drive to the right in figure 1. A longitudinal distance D1 between the first and second vehicles 1, 2 is relatively close so that the first vehicle 1 affects the air resistance for the second vehicle 2.

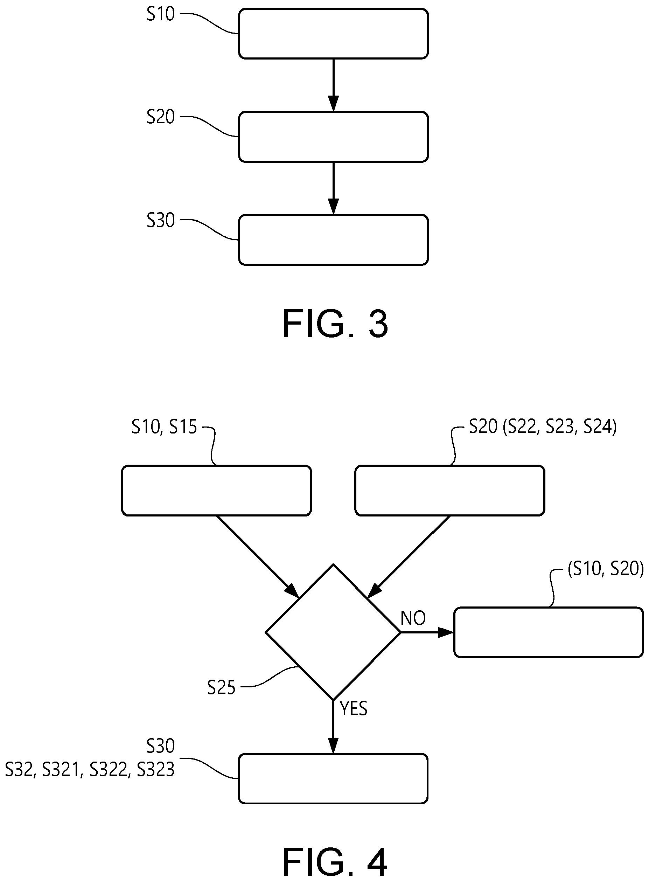

Figure 3 shows a flow chart for a first, general example embodiment of a method for reducing air resistance for the second vehicle 2 in figure 1 comprising the following steps:
**S10** - determining a current lateral position P1 of the second vehicle 2 in relation to the first vehicle 1;
**S20** - identifying a desired lateral position P2 for the second vehicle 2 in relation to the first vehicle 1, in which desired lateral position P2 the air resistance for the second vehicle 2 is lower than in the current lateral position P1 under current conditions; and
**S30** - moving the first and/or the second vehicle 1, 2 sideways so as to assume or at least approach the desired lateral position P2 for the second vehicle 2 in relation to the first vehicle P1.

As indicated in figure 1, the desired lateral position P2 is located a distance D2 to the left of the second vehicle 2 (in relation to the driving direction). According to step S30, the second vehicle 2 is thus to be moved sideways/leftwards towards the desired lateral position P2 (typically while keeping the same longitudinal distance D1 to the first vehicle 1 using an ACC system). The same relative lateral position could be achieved by moving the first vehicle 1 the distance D2 to the right or by moving the first vehicle 1 somewhat (less than D2) to the right and the second vehicle 2 somewhat to the left. If both the first and second vehicles 1, 2 are controlled by a common control system, such as a platooning control system, the movement of the first and/or second vehicle 1, 2 can be controlled by the common control system. The method can instead be controlled by a control system configured to control only the second vehicle 2, in which case the second vehicle 2 can be controlled in relation to position, speed etc. of the first vehicle 1 and in which case only the second vehicle 30 is moved sideways in step S30.

The reason for having a lower drag for the second vehicle 2 at P2 than in P1 when the road is straight even if P1 is straight behind the first vehicle 1, as indicated in figure 1, can be due to asymmetric aerodynamics of the first vehicle 1 or to a sideways directed wind.

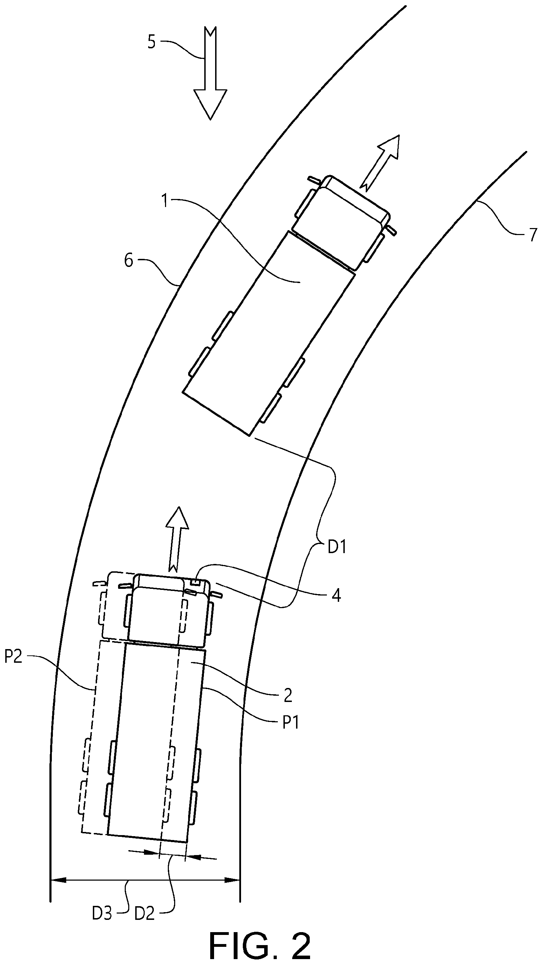

Figure 2 shows a second schematic example where the second vehicle 2 drives behind and at a similar speed as the first vehicle 1. In this example the vehicles drive upwards and slightly to the right in figure 2 following a road curvature. As in figure 1, the longitudinal distance D1 between the first and second vehicles 1, 2 is relatively close so that the first vehicle 1 affects the air resistance for the second vehicle 2.

The second vehicle 2 is provided with sensors (generally indicated with reference number 4) used for measurements of the longitudinal distance D1 and the current lateral position P1 in relation to the first vehicle 1. The sensors 4 can also be used for identifying lane markers 6, road barriers 7 and road edges (also indicated as reference 7 in figure 2) for determining a current road curvature and a lateral range D3 within which lateral movement of the second vehicle 2 is currently allowed (for the purpose of the present disclosure relating to reduction of air resistance; changing lane etc. for other purposes may still be allowed). The current road curvature may alternatively, or as a complement, be obtained from a current yaw rate of the first or second vehicle 1, 2 or map data. The lateral range D3 may alternatively, or as a complement, be obtained from a fixed value or map data.

A wind direction is indicated with arrow 5.

The second vehicle 2 is further provided with a control system (not shown) configured to receive and handle signals from the sensors 4, determine the desired lateral position P2, operate the second vehicle 2 including adjusting its longitudinal and lateral position in relation to the first vehicle 1, etc.

Figure 4 shows a flow chart for a second, more detailed example embodiment of the method for reducing air resistance for the second vehicle 2 in figure 2 comprising the following steps:
**S10** - determining the current lateral position P1 of the second vehicle 2 in relation to the first vehicle 1; including the step of:
   **S15** - obtaining information from the at least one sensor 4 in the form of a camera sensor, a radar sensor and/or a lidar sensor arranged onto the second vehicle 2 and directed towards the first vehicle 1;
**S20** - identifying the desired lateral position P2 for the second vehicle 2 in relation to the first vehicle 1, in which desired lateral position P2 the air resistance for the second vehicle 2 is lower than in the current lateral position P1 under current conditions; wherein step S20 comprises the steps of:
   **S22** - providing calculated values representing the air resistance for the second vehicle 2 in different lateral positions within the lateral range D3, wherein the calculated values are based on one or more of the following current or preset parameters: wind direction 5, vehicle speed, longitudinal distance D1 between the first and second vehicles 1, 2, aerodynamic properties of the first vehicle 1, aerodynamic properties of the second vehicle 2, and/or road curvature, wherein the parameters comprise both current and preset values, and wherein the current values comprise the wind direction 5 and the road curvature;
   **S23** - obtaining the current road curvature from the lane markers 6 and road barriers 7 identified by the sensors 4 arranged onto the second vehicle 2 (possibly in combination with e.g. signals obtained from a current yaw rate of the second vehicle 2 or map data); wherein the lateral range D3 in this example is set by the current lane markers 6 and the road barriers 7 identified by a the sensor 4 arranged onto the second vehicle 2; and
   **S24** - identifying the desired lateral position P2 based on the calculated values representing the air resistance;
**S25** - comparing the current lateral position P1 with the desired lateral position P2;
and, if the current lateral position P1 differs from the desired lateral position P2 by more than a threshold value:
**S30** - moving the second vehicle 2 sideways (to the left in this example) so as to assume or at least approach the desired lateral position P2 for the second vehicle 2 in relation to the first vehicle P1, where step S30 comprises the step of:
**S32** - applying a lateral acceleration to the second vehicle 2 so as to reduce the difference D2 between the current lateral position P1 and the desired lateral position P2, wherein step S32 comprises at least one of the following steps:
**S321** - steering the second vehicle 2 sideways using a steering control system;
**S322** - applying individual wheel brakes of the second vehicle 2 so as to induce a lateral movement; and/or
**S323** - applying increased drive torque to individual wheels of the second vehicle 2 so as to induce the lateral movement.

The steps S10-S25 are carried out in a repeating manner, both if it turns out in step S25 that the current lateral position P1 differs from the desired lateral position P2 by less than the threshold value, in which case step S30 is not carried out, as well as if the current lateral position P1 differs from the desired lateral position P2 by more than the threshold value, in which case step S30 can be carried in parallel with repeated performance of steps S10-S25.

As indicated in figure 2, the desired lateral position P2 is located a distance D2 to the left of the second vehicle 2 (in relation to the driving direction), i.e. in similarity with figure 1. According to step S30 of figure 4, the second vehicle 2 is moved sideways/leftwards towards the desired lateral position P2 (typically while keeping the same longitudinal distance D1 to the first vehicle 1 using an ACC system). In the example of figures 2 and 4, the method can be controlled by a control system arranged on-board the second vehicle 2. Such a control system is connected to the sensors 4 and various systems for sensing and controlling operation/driving of the second vehicle 2, and the control system is configured to make calculations etc. for determining P1 and P2, to decide whether to move the second vehicle 2 sideways towards P2, and to control steering, brakes etc. for carrying out step S30.

In similarity with what is mentioned above in relation to figures 1 and 3, the same relative lateral position could be achieved also for the example of figures 2 and 4 by instead moving the first vehicle 1 the distance D2 to the right or by moving the first vehicle 1 somewhat (less than D2) to the right and the second vehicle 2 somewhat to the left, which could be handled by a common (platooning) control system. However, the example of figures 2 and 4 relates to the variant where the method is controlled by a control system of the second vehicle 2.

The reason for having a lower drag for the second vehicle 2 at P2 than in P1 in figure 2 is that the road curves to the right so that it becomes favorable for the second vehicle 2 to be positioned the distance D2 to the left of the first vehicle 1. In the example of figure 2 the wind 5 comes in somewhat from the left but the wind speed is not sufficient to make it more favorable to position the second vehicle 2 in a leeward position behind the first vehicle 1. That is, with a strong wind the desired lateral position P2 might have been to the right of the current lateral position P1.

In both examples above, the method may include the step of (S40) measuring a current air resistance of the second vehicle 2. As mentioned further above, this may be done by measuring the torque applied to driveline or measuring the acceleration and taking various factors into consideration (vehicle load etc.). The measured air resistance may e.g. be used to verify whether a movement to the desired lateral position actually reduces the air resistance.

In both examples above, the method may include the step of (S50) adapting the longitudinal distance D1 between the first and second vehicles 1, 2. Typically, this includes measuring the current distance D1 and typically it means to maintain a specified time gap between the vehicles.

The measurement/determination of the current lateral position P1 can be based on signals from several sensors, which signals are then refined by sensor fusion to get a combined, better, estimate of P1. The accuracy of the measurement of the relative lateral position is preferably in the order of 5-10 cm for achieving a significant effect. The better the measurement, the greater the possibility to reduce the drag.

The lateral movement of the first and/or second vehicle is typically done using automatic steering intervention using a device which controls the steering of the vehicle, but can also be done using application of individual wheel brakes to move the vehicle laterally. It could also be done by applying drive torque to individual wheels, as can be done for example when the wheels are equipped with individual electrical motors.

It may be noted that there are known systems for controlling the lateral position of a vehicle in a lane (lane keeping systems), but these systems are based on information of the lane and/or road, they are not concerned with air resistance.

Information about the aerodynamics of the vehicle in front, i.e. first vehicle 1, may be known by a common control system controlling both the first and second vehicles or can be transferred to the control system of the second vehicle via vehicle-to-vehicle communication or possibly through measurement of the shape of the first vehicle using for example a camera or lidar sensor arranged on the second vehicle.

The sensors used to determine the position in relation of the vehicle in front should preferably be sensors that are used for other driver assistance and safety functions. This reduces cost since the method can be realized without additional hardware (i.e. it can be realized with hardware which is normally already present in the vehicle).

Knowledge of the longitudinal distance D1 between the first and second vehicle is useful for computing the desired lateral position in in curves and when the turbulence created by the first vehicle is not symmetrical.

Information on wind strength and direction can be obtained from a weather service. When taking the wind into account for finding the desired lateral position it is useful to know also the longitudinal distance D1 to the vehicle in front.

To further reduce drag it is possible to take into account more than one preceding vehicle (that are for example are driving in different lanes).

Applying the lateral acceleration to the first or second vehicle 1, 2 to reduce the difference between the current and desired lateral position P1, P2 can, for instance, done using a PID controller with the difference in lateral position as input and lateral acceleration as output, or using another control algorithm.

As mentioned above, the method is preferably used when driving with adaptive cruise control or another system for automatic control of the distance/time gap to the vehicle in front, but it can also be used when a driver is controlling the vehicle speed.

It is to be understood that the present invention is not limited to the embodiments described above and illustrated in the drawings; rather, the skilled person will recognize that many changes and modifications may be made within the scope of the appended claims.

## Claims

1. Method for reducing air resistance for a second vehicle (2) that drives behind and at a similar speed as a first vehicle (1), wherein a longitudinal distance (D1) between the first and second vehicles (1, 2) is relatively close so that the first vehicle (1) affects the air resistance for the second vehicle (2),
wherein the method comprises:
S10 - determining a current lateral position (P1) of the second vehicle (2) in relation to the first vehicle (1);
S20 - identifying a desired lateral position (P2) for the second vehicle (2) in relation to the first vehicle (1), in which desired lateral position (P2) the air resistance for the second vehicle (2) is lower than in the current lateral position (P1) under current conditions; and
S30 - moving the first and/or the second vehicle (1, 2) sideways so as to assume or at least approach the desired lateral position (P2) for the second vehicle (2) in relation to the first vehicle (P1).

2. Method according to claim 1, wherein the method comprises the step of:
S25 - comparing the current lateral position (P1) with the desired lateral position (P2).

3. Method according to claim 1 or 2, wherein at least steps S10-S20 are carried out in a repeating manner.

4. Method according to any of the above claims, wherein step S30 is carried out only if the current lateral position (P1) differs from the desired lateral position (P2) by more than a threshold value.

5. Method according to any of the above claims, wherein the step S10 comprises:
S15 - obtaining information from at least one sensor (4) in the form of a camera sensor, a radar sensor and/or a lidar sensor arranged onto the second vehicle (2) and directed towards the first vehicle (1).

6. Method according to any of the above claims, wherein the step S20 comprises:
S22 - providing calculated values representing the air resistance for the second vehicle (2) in different lateral positions within a lateral range (D3), wherein the calculated values are based on one or more of the following current or preset parameters: wind direction (5), vehicle speed, longitudinal distance (D1) between the first and second vehicles (1, 2), aerodynamic properties of the first vehicle (1), aerodynamic properties of the second vehicle (2), and/or road curvature, and
S24 - identifying the desired lateral position (P2) based on the calculated values representing the air resistance.

7. Method according to claim 6, wherein the parameters, on which the calculated values representing the air resistance for the second vehicle (2) are based, comprise both current and preset values, wherein the current values comprises at least one of the wind direction (5) and/or the road curvature.

8. Method according to claim 6 or 7, wherein the method comprises the step of:
S23 - obtaining a current road curvature from one or more of the following: a current yaw rate of the first or second vehicle (1, 2); lane markers (6), road barriers (7), and/or road edges (7) identified by one or more sensors (4) arranged onto the first or second vehicle (1, 2); and/or map data.

9. Method according to any of claims 6-8, wherein the lateral range (D3) is set by a fixed value; by map data; and/or by current lane markers (6), road barriers (7), and/or road edges (7) identified by a sensor (4) arranged onto the first or second vehicle (1, 2).

10. Method according to any of the above claims, wherein the step S30 comprises the step of:
S32 - applying a lateral acceleration to the first and/or second vehicle (1, 2) so as to reduce a difference (D2) between the current lateral position (P1) and the desired lateral position (P2).

11. Method according to any of the above claims, wherein the step S30 comprises one or more of the following steps:
S321 - steering the first and/or second vehicle (1, 2) sideways using a steering control system;
S322 - applying individual wheel brakes of the first and/or second vehicle (1, 2) so as to induce a lateral movement; and/or
S323 - applying increased drive torque to individual wheels of the first and/or second vehicle (1, 2) so as to induce a lateral movement.

12. Method according to any of the above claims, wherein only the second vehicle (2) is moved sideways in step S30.

13. Method according to any of the above claims, wherein the method comprises the step of:
S40 - measuring a current air resistance of the second vehicle (2).

14. Method according to any of the above claims, wherein the method comprises the step of:
S50 - adapting the longitudinal distance (D1) between the first and second vehicles (1, 2).

15. A vehicle (1, 2) comprising a control system, wherein the control system is configured to perform the steps of the method according to any of claims 1-14.

16. A control system for controlling one or more vehicles (1, 2), wherein the control system comprises one or more control units configured to perform the steps of the method according to any of claims 1-14.
